# EUROPÄISCHE PATENTANMELDUNG

(11) **EP 0 571 361 A2**
(43) Veröffentlichungstag der Anmeldung: **24.11.1993**
(21) Anmeldenummer: 93890107.1
(22) Anmeldetag: 21.05.1993
(51) Int. Cl.: G07F 9/10, A47J 37/12

(54) **Portioniervorrichtung**

(30) Priorität: 22.05.1992 AT 1068/92
(71) Anmelder: Famulus GmbH, 8051 Graz (AT)
(72) Erfinder: Neukam, Helmut, A-8071 Hausmanstätten bei Graz (AT)
(74) Vertreter: Holzer, Walter, Dipl.-Ing.

(57) **Zusammenfassung**

Vorrichtung zum portionsweisen Zuführen von gefrorenen Pommes Frites zu einer Friteuse, mit einem in einem Gefrierschrank (1) angeordneten Vorratsbehälter (2) für die gefrorenen Pommes Frites und einer einem Auslaß (2') des Voratsbehälters nachgeordneten, drehbar gelagerten zylindrischen Trommel (3), die gegen den Auslaß stirnseitig offen und an ihrer Innenumfangswand mit einem konzentrischen Schacht (4) zum Mitnehmen und Ausrichten von Pommes Frites sowie mit einem diesem Schacht in Drehrichtung der Trommel (3) nachgeordneten volumetrischen Portionierbehälter (5) ausgestattet ist, der aus einer Relativlage zur Trommel, in welcher er vom Mitnahme- und Ausrichtschacht mitgenommene Pommes Frites empfängt, in einer vom Behälter abdeckbaren Umfangswandöffnung der Trommel in eine Abgabestellung schwenkbar ist, in welcher er die Portion an den Einlaß der Friteuse abgibt.

## Beschreibung

Die Erfindung betrifft eine Vorrichtung zum portionsweisen Zuführen von gefrorenen Pommes Frites zu einer Friteuse, mit einem in einem Gefrierschrank angeordneten Vorratsbehälter für die gefrorenen Pommes Frites und einer einem Auslaß des Vorratsbehälters nachgeordneten Portioniereinrichtung, mit welcher dem Einlaß der Friteuse jeweils eine Portion zuführbar ist.

Bei einer bekannten Vorrichtung dieser Art wird die Positioniereinrichtung durch eine Waage gebildet, welcher die Pommes Frites durch einen Kratzboden zugeführt werden, der den Auslaß des Vorratsbehälters überstreicht. Diese Konstruktion hat den Nachteil, daß sie wegen des Wägevorganges empfindlich und wartungsanfällig ist. Überdies sind die Verwendung und der Einbau einer Waage mit erheblichen Kosten verbunden.

Die Erfindung zielt darauf ab, eine konstruktiv einfache und kostengünstige Vorrichtung der einleitend angegebenen Art zu schaffen, mit welcher gefrorene Pommes Frites einer Friteuse eines Zubereitungs- und Abgabeautomaten für Pommes Frites in genau vorbestimmter Menge ohne Störungsgefahr zugeführt werden können. Dies wird erfindungsgemäß dadurch erreicht, daß dem Auslaß des Vorratsbehälters eine um eine horizontale Achse drehbar gelagerte zylindrische Trommel nachgeordnet ist, die gegen den Auslaß stirnseitig offen und an ihrer Innenumfangswand mit einem konzentrischen Schacht zum Mitnehmen und Ausrichten von Pommes Frites sowie mit einem diesem Schacht in Drehrichtung der Trommel nachgeordneten volumentrischen Portionierbehälter ausgestattet ist, der aus einer Relativlage zur Trommel, in welcher er vom Mitnahme- und Ausrichtschacht mitgenommene Pommes Frites empfängt, in einer vom Behälter abdeckbaren Umfangswandöffnung der Trommel in eine Abgabestellung schwenkbar ist, in welcher er die Portion an den Einlaß der Friteuse abgibt.

Gemäß einer bevorzugten Ausführungsform der Erfindung erstreckt sich der Mitnahme- und Ausrichtschacht in Umfangsrichtung der Trommel im wesentlichen über einen Viertelkreis.

Nach einem anderen Erfindungsmerkmal ist der Portionierbehälter im Inneren der Trommel schwenkbar gelagert und mittels eines in einer feststehenden Führung geführten Abtasters in die Abgabestellung verschwenkbar, in welcher er mit seiner offenen Stirnseite aus der Trommelumfangswand vorragt.

Die Erfindung wird nachfolgend an einem Ausführungsbeispiel unter Bezugnahme auf die Zeichnungen näher erläutert.
Fig. 1 ist ein Vertikalschnitt einer Vorrichtung gemäß der Erfindung und die
Fig. 2 und 3 sind jeweils Seitenansichten der Vorrichtung in zwei verschiedenen Betriebsstellungen.

Die gezeigte Portioniervorrichtung dient zur automatischen Entnahme von Einzelportionen von beispielsweise 120 g gefrorenen Pommes Frites aus einem beispielsweise 10 - 20 kg fassenden Schüttgutvorratsbehälter. Die gesamte Portioniervorrichtung befindet sich in einem auf beispielsweise -18°C eingestellten Gefrierschrank 1. Die Pommes Frites werden in gefrorenem Zustand in den Vorratsbehälter 2 geschüttet, der in seinem unteren Teil einen Auslaß 2' aufweist. Im Bereich des Auslasses 2' ist außerhalb des Behälters 2 eine rotierende zylindrische Trommel 3 um eine horizontale Achse X-X drehbar angeordnet und gegen den Auslaß 2' des Vorratsbehälters 2 offen, so daß die Pommes Frites infolge eines schrägen Bodenteiles des Vorratsbehälters 2 in die Trommel 3 rutschen.

Infolge der Drehbewegung der Trommel 3 im Uhrzeigersinn gleiten die Pommes Frites in einen an der Trommelinnenumfangswand befestigten, zur Trommel konzentrischen Mitnahme- und Ausrichtschacht 4, in dem sie in ihrer Längsrichtung ausgerichtet werden, und weiter in einen dem Mitnahme- und Ausrichtschacht in Drehrichtung der Trommel nachgeordneten becherförmigen Portionierbehälter 5, der volumetrisch die Portionsgröße bestimmt. Der Portionierbehälter 5 ist an seiner Hinterseite von einer an der Trommelumfangswand in Lagern 3' gelagerten Schwenkachse 6 verbunden, die über einen Hebel 6' durch einen Abtaster 6'' angesteuert wird, der in einer feststehenden Kulissenführung 7 geführt ist.

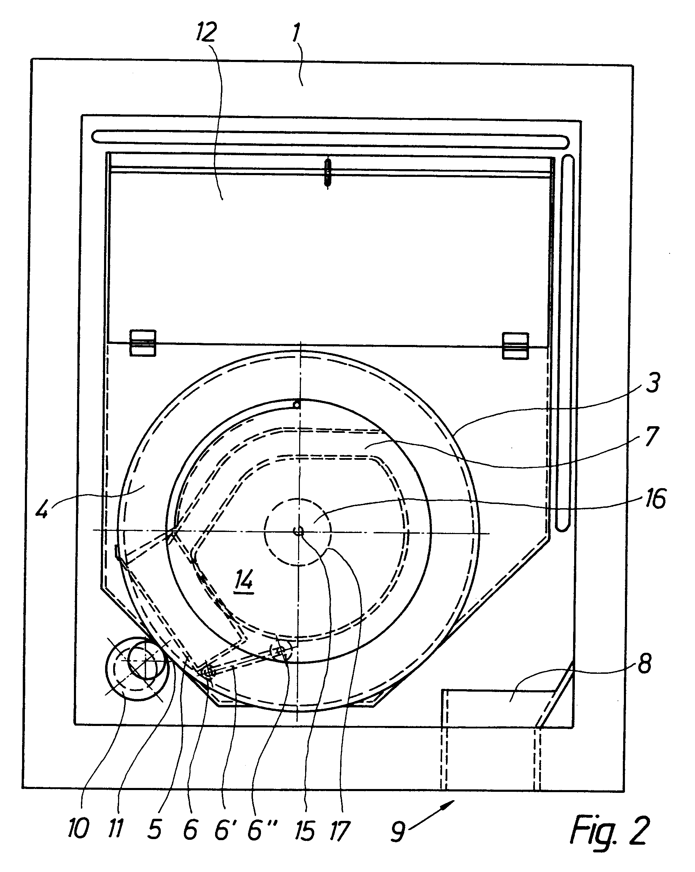

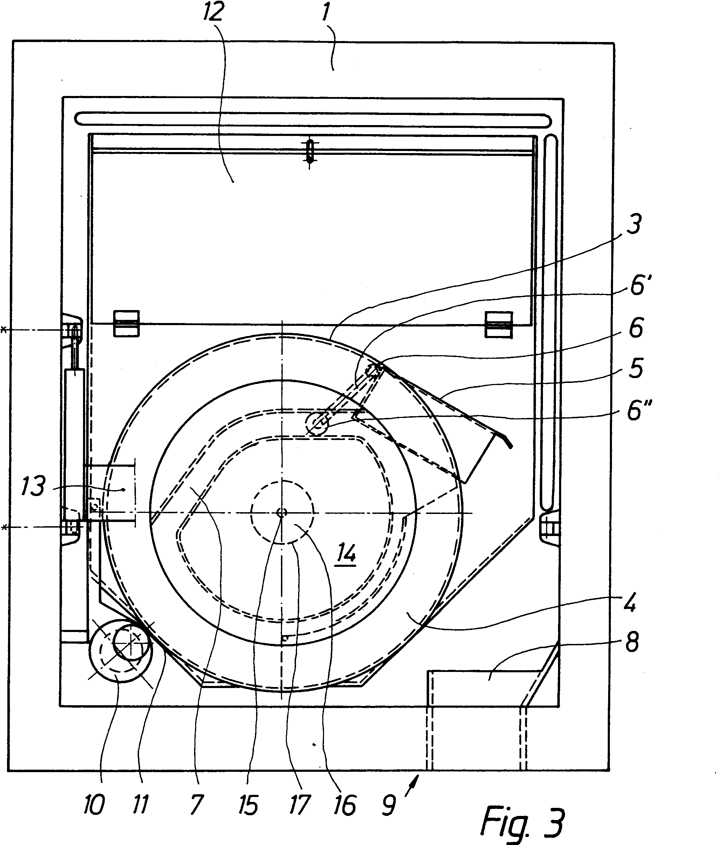

Bei einer vollen Umdrehung der Trommel 1 wird der Portionierbehälter 5 beim Durchfahren des unteren Teiles des Vorratsbehälters 2 in seiner in die Trommel eingeklappten Lage vom Schacht 4 her gefüllt (Fig. 2), und beim Durchfahren des oberen Teiles über eine vom Behälter 5 vorher abgedeckte Öffnung 3' aus der Trommel nach außen geschwenkt (Fig. 3), wobei er die Pommesportion außerhalb der Trommel 1 in einen Zuführschacht 8 der nicht gezeigten Friteuse kippt. Vom Zuführschacht 8 gelangen die Pommes Frites über eine nur angedeutete Schleuse 9 in die Friteuse. Die Schleuse wird ebenfalls durch eine an der Portioniertrommel angebrachte (nicht gezeigte) Kulisse angesteuert.

Die Trommel 1 wird durch einen seitlich angeordneten E-Motor über ein Zahnrad 10 und z.B. eine am Außenring der Trommel befestigte Kette 11 angetrieben. Der Motor wird durch einen an der Schleuse 9 befindlichen Endschalter angesteuert. Bei jeder vollen Umdrehung der Trommel wird eine Portion abgegeben.

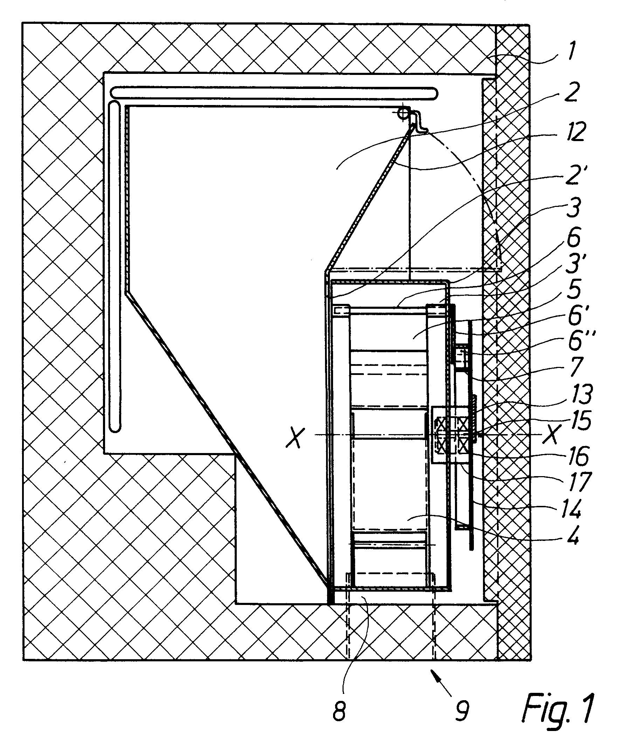

Der Vorratsbehälter 2 läßt sich über eine schwenkbare Klappe 12 befüllen. Die Trommel 1 ist zum Reinigen von vorne gesehen (Fig. 3) um 90° mittels eines Schwenkarmes 13 nach links schwenkbar. Der Schwenkarm 13 trägt, wie Fig. 1 zeigt, mittels einer Stirnplatte 14 die Kulissenführung 7. Von der der Trommel 3 zugekehrten Seite der Stirnplatte 14 ragt ein Zapfen 15 in das Trommelinnere, auf dem Lager 16 sitzen, die eine mit der Trommelstirnwand fest verbundene Lagerbuchse 17 abstützen.

Es versteht sich, daß das gezeigte Ausführungsbeispiel im Rahmen der Erfindung verschiedentlich abgewandelt werden kann, z.B. was die Steuerung des Portionierbehälters 5 und den Antrieb der Trommel 1 betrifft.

## Patentansprüche

1. Vorrichtung zum portionsweisen Zuführen von gefrorenen Pommes Frites zu einer Friteuse, mit einem in einem Gefrierschrank angeordneten Vorratsbehälter für die gefrorenen Pommes Frites und einer einem Auslaß des Vorratsbehälters nachgeordneten Portioniereinrichtung, mit welcher dem Einlaß der Friteuse jeweils eine Portion zuführbar ist, dadurch gekennzeichnet, daß dem Auslaß des Vorratsbehälters (2) eine um eine horizontale Achse drehbar gelagerte zylindrische Trommel (3) nachgeordnet ist, die gegen den Auslaß (2') stirnseitig offen und an ihrer Innenumfangswand mit einem konzentrischen Schacht (4) zum Mitnehmen und Ausrichten von Pommes Frites sowie mit einem diesem Schacht in Drehrichtung der Trommel (3) nachgeordneten volumetrischen Portionierbehälter (5) ausgestattet ist, der aus einer Relativlage zur Trommel, in welcher er vom Mitnahme- und Ausrichtschacht (4) mitgenommene Pommes Frites empfängt, in welcher vom Behälter abdeckbaren Umfangswandöffnung der Trommel in eine Abgabestellung schwenkbar ist, in welcher er die Portion an den Einlaß der Friteuse abgibt.

2. Vorrichtung nach Anspruch 1, dadurch gekennzeichnet, daß der Mitnahme- und Ausrichtschacht (4) sich in Umfangsrichtung der Trommel (3) im wesentlichen über einen Viertelkreis erstreckt.

3. Vorrichtung nach Anspruch 1 oder 2, dadurch gekennzeichnet, daß der Portionierbehälter (4) im Inneren der Trommel (3) schwenkbar gelagert und mittels eines in einer feststehenden Führung (7) geführten Abtasters (6'') in die Abgabestellung verschwenkbar, in welcher er mit seiner offenen Stirnseite aus der Trommelumfangswand vorragt.
